# EUROPEAN PATENT APPLICATION

(11) **EP 1 988 643 A1**
(43) Date of publication of application: **05.11.2008**
(21) Application number: 07290558.1
(22) Date of filing: 04.05.2007
(51) Int. Cl.: H04B 7/005, H04Q 7/26

(54) **A method for allocating power in a digital wireless communication network**

(71) Applicant: Alcatel Lucent, 75008 Paris (FR)
(72) Inventor: Godin, Philippe, 78220 Viroflay (FR); Linden, Gabriel, 78450 Villepeux (FR); Demarez, Christophe, Swindon SN5 5QP (GB); Mihailescu, Claudiu, 78000 Versailles (FR)
(74) Representative: Richardt, Markus Albert

(57) **Abstract**

The invention relates to a method of allocating power in a digital wireless communication network (100) by a radio network controller (RNC; 104) to a base station (node B; 114) for broadcasting data over multiple cells (124; 126) served by the base station (114), the method comprising:
- transmitting the data from the RNC (104) to the base station (114) using a single transport bearer (130),
- transmitting power control information from the RNC (104) to the base station (114) using the single transport bearer (130), the power control information specifying for each of the cells (124; 126) the individual transmission power being required for broadcasting the data.

## Description

### Technical field

The invention relates to a method of allocating power in a digital wireless communication network, a method of receiving power allocation in a digital wireless communication network, a radio network controller, a base station and a computer program product.

### Background and related art

One of the most challenging tasks in mobile telecommunication is to provide video services to a wireless user. While existing second generation wireless networks support voice services, third generation wireless systems and packet based wireless networks' goal is to support the provision of video services to a customer. A universal mobile telecommunication system (UMTS) constitutes the third generation (3G) of cellular wireless networks which aims to provide high speed data access along with real time voice and video calls. However, with the provision of media services to customers, the problem has arisen that a limited bandwidth or data transmission has to be distributed effectively among a multitude of wireless users. Therefore, there is a lot of research work going on in the industry to support the high bandwidth video and multimedia applications via wireless networks.

Multimedia broadcasts/multicast service (MBMS) is one of the evolving service concepts within the third generation networks. MBMS is a user service, which is a combination of both a broadcast service and a multicast service. Third generation partnership (3GPP) is working on establishing standards for multimedia broadcast/multicast services.

3GPP MBMS services can be provided in each cell by either multiple point to point (PTP) channels or by a single point to multi-point (PTM) channel which requires a decision to be made between these two approaches. Thereby, this decision is drawn with respect to an effective resource saving for transmitting multimedia services to a multitude of wireless users.

One of the most important aspects in MBMS is power control. The reason can be found in the fact, that power control has an important effect on the efficiency of providing MBMS traffic to a multitude of users. The base stations (node Bs) transmission power is a limited resource which must be shared among all MBMS users in a cell. The main purpose of power control is thereby to minimize the transmitted power, thus avoiding unnecessary high power levels and eliminating inter-cell interference.

Typically, in case of PTM MBMS transmission, MBMS traffic is broadcast in each cell using the forward access channel (FACH). Thereby, originally it was planned that for each cell associated to a base station a separate transport bearer had to be used for transporting MBMS traffic from the RNC to the base station. However, this had a major disadvantage, that in case of broadcasting the same data over multiple cells to a multitude of user equipments (UEs) said data had to be transported from the RNC to the node B in a parallel manner over multiple transport bearers. A lot of transport network resources were therefore wasted since the same data had to be unnecessarily transported multiple times.

This led to the development of a new 3GPP RAN3 specification, in which it was specified that several FACH channels share the same transport bearer over the lub interface between the RNC and the node B. A discussion of this solution proposal can be found in the document 'lub transport efficiency improvement for MBMS', Ericsson, Tdoc R3-061793, 3GPP TSG-RAN WG3 Meeting #54, 2006. Thereby, when the same MBMS data is transmitted over multiple cells of the same node B, lub bandwidth is saved if all FACH channels that correspond to the cells share the same transport bearer.

However, this concept has the major disadvantage, that all the cells sharing the same transport channel also have to share the same power offset value per TTI, which is the time interval within a Fach packet data unit (PDU) is sent. This is due to the fact that only one power offset value can be included in every FACH data frame. Currently the standards enforce the inclusion of only one power offset value per TTI in a FACH data frame. On receipt of this FACH data frame, the node B has no other choice than considering the power offset as applicable to all the cells over which the FACH PDU is to be transmitted, i.e. all the cells which share the same lub transport bearer when the FACH of the cells use the transport bearer sharing feature of MBMS.

It is currently not possible to send multiple power offset values in the header of the FACH data frame and therefore not possible to include different power offset values that would correspond to the different cells. Consequently, the same power offset value must be applied simultaneously to all cells that share a same transport bearer over lub and therefore, an optimization of individual power control for MBMS data transmission over respective cells cannot be performed in an optimized way.

The concept, disclosing that FACH channels corresponding to different cells share the same transport bearer is described in detail in the 3GPP TS25.433 V7.4.0 specification. The UTRAN lub interface is described in detail in the 3GPP TS25.430 specification.

The best existing solution to apply an individual power offset to one particular cell in this scenario currently is to use one or multiple control plane procedures like the common transport channel reconfiguration in parallel of the PDU data sending over the user plane. This solution is however not good enough, because it does not allow a precise synchronization at a TTI level between the different cells for which a different power offset must be applied because no precise activation time is given by this control plane procedure and it can take a long variable time to complete. Also, this existing solution would require the extra execution of multiple control plane procedures in parallel when the power of several cells must be changed simultaneously. This is however often the case because the cells of the same node B are contiguous and the power supplied in these cells are therefore sometimes linked.

### Summary of the invention

The present invention provides a method of allocating power in a digital wireless communication network by a radio network controller (RNC) to a base station (node B) for broadcasting data over multiple cells served by the base station, the method comprising transmitting the data from the RNC to the base station using a single transport bearer and transmitting power control information from the RNC to the base station using the single transport bearer, the power control information specifying for each of the cells the individual transmission power being required for broadcasting the data.

The method according to the invention has the advantage, that for broadcasting data over multiple cells only a single transport bearer for transmitting the data from the RNC to the base station is used, whereas the possibility is maintained that the transmission power is controllable individually for every individual broadcasting of the data over each of the multiple cells. Therewith, different power offset values can be applied to different cells of a node B even when respective channels of the cells used for broadcast data delivery share the same transport bearer.

Another advantage is, since the power control information is transmitted together with the payload broadcasting data in the user plane, a real time adjustment of different power offset values can be applied to different cells of a node B.

In accordance with an embodiment of the invention, the digital wireless communication network is a UMTS network. Thereby, the transmitted data is multimedia broadcast/multicast service (MBMS) data. This allows a highly efficient distribution of multimedia data streams to user equipments in the digital wireless communication network. MBMS offers a high capacity for data transmission which allows for multicast distribution instead of a point to point link to user equipments in the digital wireless communication network. This leads to a more efficient system usage enabling streaming and download services for a multitude of user equipments served by a respective node B.

In accordance with an embodiment of the invention, the data is transmitted from the RNC to the base station using the forward access channel (FACH). Using the FACH channel has the advantage, that it is already traditionally used to carry downlink control information and packet data, whereby more than one FACH channel can be present in a cell. Compared to using the dedicated signaling channel (DSCH) the FACH channel has major advantages in case the number of users using a service provided over the FACH channel increases, since DSCH would incur significant uplink feedback messages when a group size is large. Therewith, FACH is chosen to be the channel to carry in general MBMS traffic in 3GPP.

In accordance with an embodiment of the invention, the method further comprises receiving an index associated to a Fach from the base station to the RNC during a common data channel setup procedure performed in the control plane, the index identifying the FACH within all the FACHs sharing the same transport bearer at the interface between the RNC and the base station. This solution ensures that the relationship between the cell indexes and cell identities are already known in advance.

In accordance with an embodiment of the invention, said index is comprised in the power control information transmitted from the RNC to the base station instructing the base station to apply a respective transmission power, wherein the respective transmission power is specified for the FACH index in the power control information. Therewith, by transmitting power control information from the RNC to the base station using the single transport bearer, a precise mapping of the individual transmission power being required for broadcasting the data to a respective cell is performable.

In another aspect, the invention relates to a method of receiving power allocation in a digital wireless communication network by a base station (node B) from a radio network controller (RNC) for broadcasting data over multiple cells served by the base station, the method comprising receiving the data by the base station from the RNC using a single transport bearer and receiving power control information by the base station from the RNC using the single transport bearer, the power control information specifying for each of the cells the individual transmission power being required for broadcasting the data.

In accordance with an embodiment of the invention, the method further comprises transmitting an index associated to a Fach from the base station to the RNC during the common data channel setup procedure performed in the control plane, the index identifying the FACH within all the FACHs sharing the same transport bearer at the interface between the RNC and the base station. Therewith, the relationship between the cell indexes and the cell identities are already known in advance by the node B via the control plane through the procedure that serves at the establishment of the FACH channel. On receipt of the FACH data frames, the node B retrieves all cell identities corresponding to the received cell indexes and is able to consider the received power offset values to be applied to these cells in the indicated order.

In another aspect, the invention relates to a radio network controller (RNC) adapted to perform the method according to the invention and/or a base station (node B) adapted to perform the method according to the invention.

In another aspect, the invention relates to a computer program product comprising computer executable instructions adapted to perform the method according to the invention.

### Brief description of the drawings

In the following preferred embodiments of the invention will be described in greater detail by way of example only making reference to the drawings in which:
- Figure 1: shows a block diagram of a wireless communication network,
- Figure 2: shows a flowchart illustrating a method for allocating power in a digital wireless communication network,
- Figure 3: shows a flowchart illustrating a method for receiving MBMS data in a shared transport bearer configuration,
- Figure 4: shows a Fach data frame structure.

### Detailed description

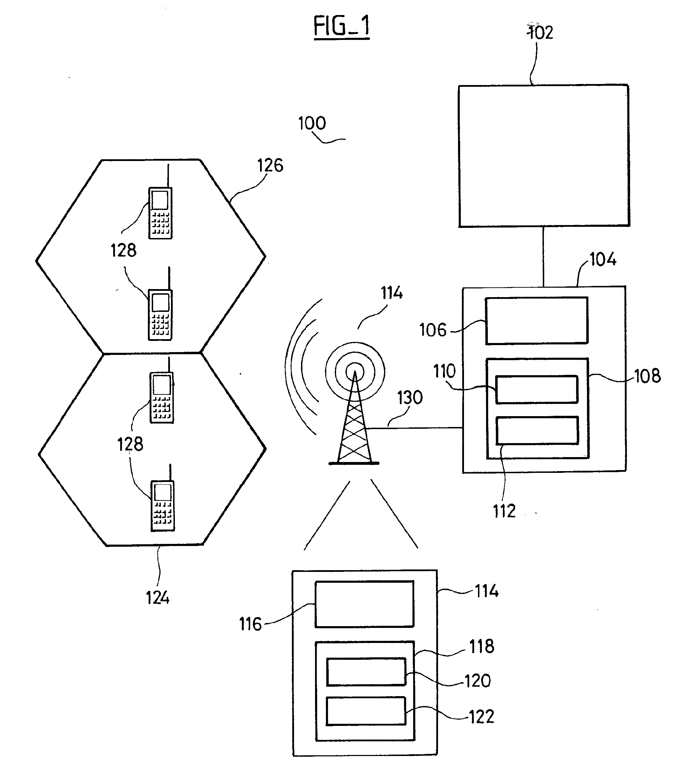

Fig. 1 shows a digital wireless communication network 100. The digital wireless communication network 100 comprises a core network 102. It further comprises a radio network controller (RNC) and a node B (base station) 114. Thereby, the core network 102 is responsible for switching and routing voice and data connections, while the RNC 104 and the node B 114 handle all radio related functionalities.

The radio network controller (RNC) 104 comprises a processor 106 and a memory 108. The memory 108 comprises a program module 110 comprising computer executable instructions being executable by the processor 106. In the present example, the base station constituted by the node B 114 provides radio coverage to two cells 124 and 126. In fig. 1, the node B 114 is communicating to four user equipments (UEs) 128 and the RNC 104, whereby the connection to the RNC 104 is established via a respective lub interface not shown here.

The node B 114 comprises a processor 116 and a memory 118. Thereby, the memory 118 comprises a program module 120 comprising instructions executable by the processor 120. In the present example, the node B 114 is broadcasting multimedia data to the user equipments 128, whereby all user equipments 128 receive the same broadcasted data. Normally, broadcasting multimedia data from the node B 114 over the cell 124 and the cell 126 to the user equipments 128 would require two individual transport bearers 130, each transport bearer 130 carrying a Fach channel. However, in order to reduce the amount of data traffic between the RNC 104 and the node B 114, a single transport bearer 130 is used for transmitting respective MBMS data from the RNC 104 to the node B 114 in the present example. Therewith, the common transport bearer 130 is shared over the lub interface between the RNC 104 and the node B 114.

However, traditionally it is rather difficult to individually control the node B transmit power in an efficient way for the cell 124 and cell 126 when such common transport bearer 130 is shared. In order to control the respective transmit power, either separate transport bearers would have to be used which is a rather bandwidth wasting issue or dedicated transport channel reconfiguration procedures would have to be performed in the control plane for every FACH, without synchronization. In order to solve that problem, additional power control information specifying for each of the cells 124 and 126 the individual transmission power being required for broadcasting the data is transmitted using the single transport bearer. Thereby, this information is transmitted over the common transport bearer comprised in the transmitted FACH data frame structure.

In order to associate the power offset information comprised in the FACH data frame structure with the respective cells 124 and 126, a relationship between identities of the cell 124 and the cell 126 and respective cell indexes to be comprised in the FACH data frame structure have to be established. Therefore, after establishing such kind of relationship, respective tables mapping the relationship between the cell indexes and the cell identities are stored as tables 112 and 122 in the RNC 104 and the node B 114, respectively. On receipt of FACH packet data units (PDUs) embedded in FACH data frames, the node B 114 retrieves all cell identities corresponding to cell indexes comprised in the FACH data frame structure and considers the also comprised power offset values to be applied to the cells 124 and 126 in the order indicated in the FACH data frame structure.

In other words, the mapping table 112 and 122 is used to identify a cell 124 or 126 and therewith a respective FACH channel within all the FACH channels sharing the same transport bearer at the lub interface between the RNC 104 and the node B 114.

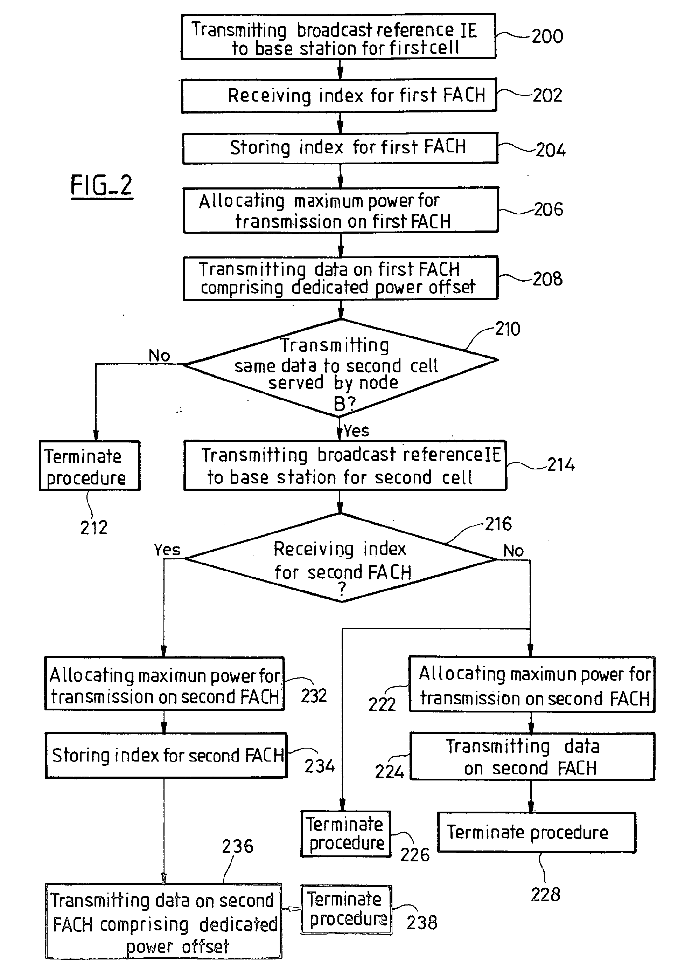

Fig. 2 shows a flowchart illustrating a method for allocating power in a digital wireless communication network for broadcasting MBMS data over multiple cells served by a common node B. In step 200 a broadcast reference information element (IE) is transmitted by the RNC to the base station for the first cell. Thereby, the broadcast reference IE is included in the FACH parameters IE of the common transport channel setup request message. In case the node B supports transport bearer sharing for FACH, the node B assigns a transport channel index for the new FACH and transmits this index using the common transport channel setup response message. Therewith, in step 202, the index for the first FACH channel is received by the RNC. In step 204, the RNC stores said index for the first FACH. This is necessary in order to associate correctly power offset values to be transmitted together with data in the FACH data frame for a respective cell.

In step 206, the RNC allocates the maximum power for transmission on the first FACH channel. This is followed by step 208, where MBMS data is transmitted on the first FACH channel comprising a dedicated power offset for broadcasting said data by the node B to the first cell.

In case that in step 210 the same data already being transmitted on the first FACH channel has also to be transmitted to the same node B for broadcasting over a second cell, the RNC transmits the broadcast reference IE (already used for the first cell) in the FACH parameters IE of the common transport channel setup request message to the node B for the second cell in step 214. In case in response to said transmission step 214, the RNC receives a respective index for the second FACH channel in step 216, the RNC allocates maximum power for transmission on a second FACH channel in step 232. Further, in step 234 the RNC stores the received index for the second FACH in an internal memory for mapping the index to a respective cell identifier.

This is followed by step 238, where MBMS data is transmitted on the second FACH channel comprising a dedicated power offset for broadcasting said data by the node B to the second cell.

In case, the RNC does not receive a respective index for the second FACH channel in step 216 in response to the transmission in step 214, the standard procedure known in the art is used to allocate maximum power for transmission on the second FACH channel in step 222 and transmitting data on the second FACH channel 224 using separate transport bearers at the lub interface between the RNC and the node B. With the steps 226 and 228, respectively, the procedure for allocating power is terminated.

Performing the steps 222 to 228 compared to the steps 230 to 238 has the major disadvantage, that the same data is transmitted over two different FACH channels therewith using two different transport bearers, which consumes unnecessarily transmission resources. Therefore, the performing the steps 230 to 238 is far more efficient regarding transmission resource consumption at the lub interface.

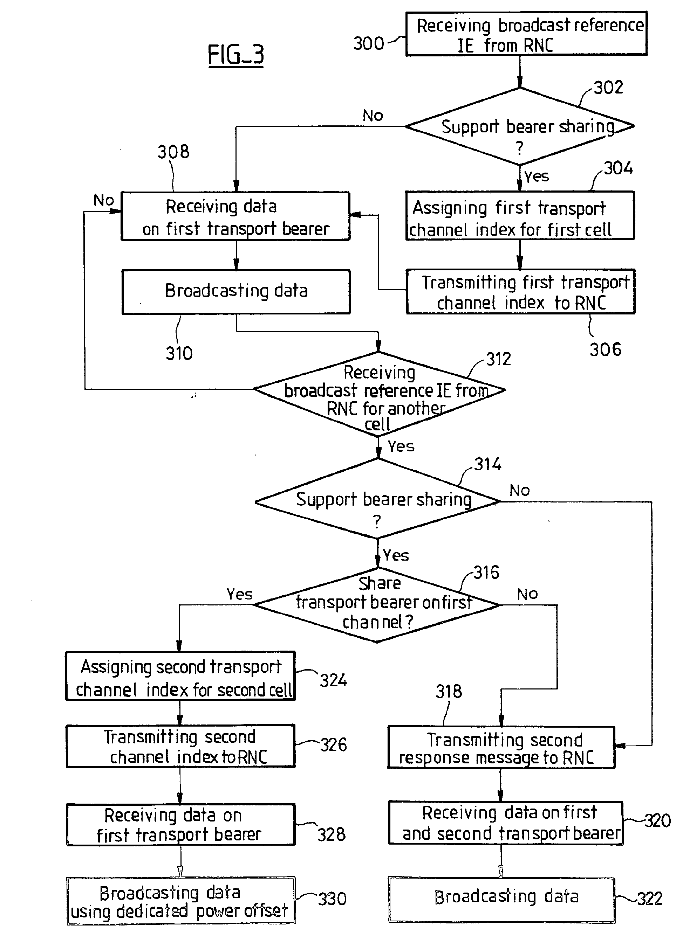

Fig. 3 shows a further flowchart illustrating a method for receiving MBMS data in a shared transport bearer configuration. In step 300, a broadcast reference IE included in FACH parameters IE of the common transport channel setup request message is received by the node B from the RNC. In case in step 302 the node B supports bearer sharing FACHs, the node B assigns a first transport channel index for the first cell in step 304. This transport channel index is transmitted in step 306 using the common transport channel information response IE of the common transport channel setup response message to the RNC. This indicates to the RNC that the node B supports FACH sharing and that the RNC can use this transport channel index to identify this FACH within the set of FACHs sharing the transport bearer.

Either in case in step 302 the node B decides not to support bearer sharing or after step 306, data is received on the first transport bearer in step 308. Thereby, in case of bearer sharing, respective received FACH data frame structures comprise the data itself, as well as dedicated power offsets for broadcasting offset data over the first cell. In step 310, the data is broadcasted using said dedicated power offset.

In step 312, again the node B receives a broadcast reference IE from the RNC for another cell. Since at least one other active FACH with the same broadcast reference and the same transport format set already exist in the first cell, in case the node B supports bearer sharing in step 314 the node B may decide in step 316 not to set up an own transport bearer but to share the transport bearer of the FACH associated with the first cell. In this case, in step 324 the node B assigns a second transport channel index for the second cell.

The node B includes a broadcast common transport bearer indication IE in the common transport channel information response IE of the common transport channel setup response message. Thereby, the broadcast common transport bearer indication IE identifies an active FACH in another cell (in the present example the first cell) whose transport bearer shall be shared by the new FACH. In step 326, the common transport channel setup response message also comprising the second channel index is transmitted to the RNC. This is followed by step 328, where data is received by the node B from the RNC on the common transport bearer identified in the broadcast common transport bearer indication IE. Thereby, the received data also comprise power offset values for broadcasting said data over the first and the second cell using the respective dedicated power offsets. Finally, in step 330, the node B broadcasts the data using said dedicated power offsets.

If either in step 314 the node B does not support bearer sharing or if in case in step 316 the node B does decide not to use transport bearer sharing on the first channel, a state of the art procedure is launched by the node B for receiving data separately on the first and second transport bearer. Therewith, in step 318 a respective response message is transmitted to the RNC, followed by said receiving of data separately on the first and the second transport bearer and broadcasting the data in step 322.

It shall be noted, that a step 318 to 322 may comprise receiving separate data streams via the first and the second transport bearer which means, that a separate transport bearer has to be setup for each cell. This however has the disadvantage, that since the exact MBMS data is sent over two separate transport bearers the bandwidth is wasted.

In another possibility, the steps 318 to 322 may comprise receiving MBMS data over only one shared transport bearer as suggested in the Tdoc R3-061793, Ericsson, 'lub transport efficiency improvement for MBMS', 3GPP TSG-RAN WG3 Meeting #54, 2006. This would however have the disadvantage as already mentioned above, that a separate control for MBMS data broadcast over respective different cells is rather ineffective. In contrary, with the steps 324 to 330, dedicated power offsets are applicable individually to each of the respective cells over which the MBMS data has to be broadcasted, which due to the usage of only a single transport bearer saves lub bandwidth and also allows for a data broadcast with optimized transmission power.

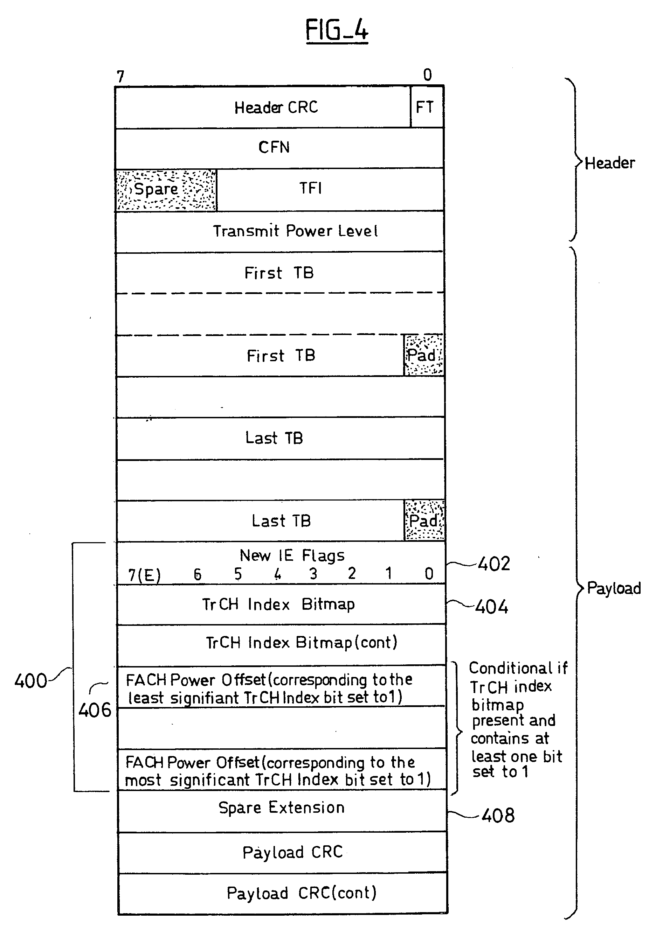

Fig. 4 shows a Fach data frame structure. Thereby, this is basically the data frame structure as defined in the 3GPP TS25.435 technical specification. The difference to the data frame structure specified in said technical specification is, that the spare extension comprised in the FACH data frame structure is filled by multiple information elements 400. These information elements are necessary in order to provide multiple FACH power offset values 406 to a node B. In order to indicate to which cells the power of said values 406 correspond to, a TrCH bitmap 404 of a cell index is provided in the frame extension. Also comprised is a new IE flag field 402, wherein bit 0 of the new IE flag field 402 in the FACH data frame structure indicates if the TrCH index bitmap IE 404 is present (bit=1) or not present (bit=0) in the two octets following the new IE flag field. Thereby, bits 1 to 6 of the new IE flag field in the FACH data frame are set to 0.

The number of FACH power offset fields 406 present in the FACH data frame equal N, wherein N is the number of bits set to 1 in the TrCH index bitmap IE. Thereby, N indicates the number of FACH channels sharing a single transport bearer. Therewith, the length of the spare extension field in the FACH data frame is between 0 and {32 - (2 * N)} octets, since the total length of the original spare extension field is reduced by the number of new information elements 400.

If a transport bearer is configured to be shared by several transport channels (e.g. FACH channels), the TrCH index bitmap IE 404 indicates the number and the indexes of the transport channels sharing the transport bearer for which specific optional information fields (e.g. FACH power offsets 406) are included in the data frame. Preferably, the node B reports the transport channel index during the common transport channel setup procedure related to each of the transport channels sharing the same transport bearer.

Negative offsets specified by the information elements 406 relative to the maximum power configured for the physical channels used for the respective transport channels are applied from the cell frame number indicated in the data frame onwards, i.e. until a new value is explicitly received for the respective transport channel, or until the respective transport channel is deleted by means of a respective procedure. This means, that the state of the art transmit power level comprised in the header of the FACH data frame structure of fig. 4 is not used at all for broadcasting of the data by the node B.

### List of Reference Numerals

- 100: Network
- 102: Core network
- 104: RNC
- 106: Processor
- 108: Memory
- 110: Module
- 112: Table
- 114: Node B
- 116: Processor
- 118: Memory
- 120: Module
- 122: Table
- 124: Cell
- 126: Cell
- 128: User Equipment
- 130: Transport Bearer

- 400: Data Frame Structure
- 402: Flag
- 404: Bitmap
- 406: FACH Power Offset
- 408: Spare Extension Field

## Claims

1. A method of allocating power in a digital wireless communication network (100) by a radio network controller (RNC; 104) to a base station (node B; 114) for broadcasting data over multiple cells (124; 126) served by the base station (114), the method comprising:
- transmitting the data from the RNC (104) to the base station (114) using a single transport bearer (130),
- transmitting power control information from the RNC (104) to the base station (114) using the single transport bearer (130), the power control information specifying for each of the cells (124; 126) the individual transmission power being required for broadcasting the data.

2. The method of claim 1, wherein the digital wireless communication network (100) is a UMTS network.

3. The method of claim 1, wherein the data is multimedia broadcast/multicast service (MBMS) data.

4. The method of claim 1, wherein the data is transmitted from the RNC (104) to the base station (114) using the forward access channel (FACH).

5. The method of claim 4, further comprising receiving an index associated to a Fach from the base station (114) by the RNC (104) during a common transport channel setup procedure performed in the control plane, the index identifying the FACH within all the FACHs sharing the same transport bearer (130) at the interface between the RNC (104) and the base station (114).

6. The method of claim 5, wherein said index is comprised in the power control information transmitted to the base station (114) instructing the base station (114) to apply a respective transmission power, wherein the respective transmission power is specified for the FACH index in the power control information.

7. A method of receiving power allocation in a digital wireless communication network (100) by a base station (node B; 114) from a radio network controller (RNC; 104) for broadcasting data over multiple cells (124; 126) served by the base station (114), the method comprising:
- receiving the data by the base station (114) from the RNC (104) using a single transport bearer (130),
- receiving power control information by the base station (114) from the RNC (104) using the single transport bearer (130), the power control information specifying for each of the cells (124; 126) the individual transmission power being required for broadcasting the data.

8. The method of claim 7, further comprising transmitting an index associated to a FACH from the base station (114) to the RNC (104) during the common transport channel setup procedure performed in the control plane, the index identifying the FACH within all the FACHs sharing the same transport bearer (130) at the interface between the RNC (104) and the base station (114).

9. A radio network controller (RNC; 104) adapted to perform any of the method steps 1 to 6 and/or a base station (node B; 114) adapted to perform any of the method steps 7 to 8.

10. A computer program product comprising computer executable instructions adapted to perform any of the preceding method steps.
